# EUROPÄISCHE PATENTANMELDUNG

(11) **EP 1 010 734 A2**
(43) Veröffentlichungstag der Anmeldung: **21.06.2000**
(21) Anmeldenummer: 99123147.3
(22) Anmeldetag: 19.11.1999
(51) Int. Cl.: C09D 5/36, C09D 17/00

(54) **Wässrige metalleffektpigmenthaltige Beschichtungszusammensetzungen**

(30) Priorität: 18.12.1998 DE 19858460
(71) Anmelder: BASF AKTIENGESELLSCHAFT, 67056 Ludwigshafen (DE)
(72) Erfinder: Seeger, Oliver, Dr., 68163 Mannheim (DE); Mronga, Norbert, Dr., 69221 Dossenheim (DE)

(57) **Zusammenfassung**

Wäßrige Beschichtungszusammensetzungen, enthaltend ein in Wasser lösliches oder dispergierbares filmbildendes Polymer, ein Metalleffektpigment auf Basis beschichteter Metallplättchen, eine organische Nitroverbindung, die zusätzlich carboxyl-, carbonyl- und/oder hydroxylfunktionalisiert ist, und ein organisches Lösungsmittel, in welchem die Nitroverbindung löslich ist, sowie weitere für wäßrige Beschichtungszusammensetzungen übliche Bestandteile.

## Beschreibung

Die vorliegende Erfindung betrifft neue wäßrige Beschichtungszusammensetzungen, die ein in Wasser lösliches oder dispergierbares filmbildendes Polymer, ein Metalleffektpigment auf Basis beschichteter Metallplättchen, eine organische Nitroverbindung, die zusätzlich carboxyl-, carbonyl- und/oder hydroxylfunktionalisiert ist, und ein organisches Lösungsmittel, in welchem die Nitroverbindung löslich ist, sowie weitere für wäßrige Beschichtungszusammensetzungen übliche Bestandteile enthalten.

Außerdem betrifft die Erfindung die Herstellung dieser Beschichtungszusammensetzungen.

Weiterhin betrifft die Erfindung Pigmentzubereitungen, die ein Metalleffektpigment auf Basis beschichteter Metallplättchen, eine organische Nitroverbindung, die zusätzlich carboxyl-, carbonyl- und/oder hydroxylfunktionalisiert ist, und ein organisches Lösungsmittel enthalten, in welchem die Nitroverbindung löslich oder dispergierbar ist.

Nicht zuletzt betrifft die Erfindung die Verwendung von organischen Nitroverbindungen, die zusätzlich carboxyl-, carbonyl- und/oder hydroxylfunktionalisiert sind, zur Stabilisierung von Metalleffektpigmenten auf Basis beschichteter Metallplättchen in wäßrigen Beschichtungszusammensetzungen.

Metalleffektpigmente gehören zu der Gruppe der Glanzpigmente, die zunehmend in vielen Bereichen der Technik eingesetzt werden, beispielsweise in Automobillacken, in der dekorativen Beschichtung, der Kunststoffeinfärbung, in Anstrichfarben, Druckfarben sowie in der Kosmetik. Ihre optische Wirkung beruht auf der gerichteten Reflexion von Licht an überwiegend flächig ausgebildeten, zueinander parallel ausgerichteten, metallischen Pigmentteilchen. Von besonderem Interesse sind mehrphasig aufgebaute Metalleffektpigmente, die z.B. mit dünnen Filmen aus Metalloxiden wie Eisen-(III) oxid, Titandioxid, Chrom (III) oxid und/oder Siliciumdioxid beschichtet sind und aufgrund von Interferenz-, Reflexions- und gegebenenfalls Absorptionsphänomenen winkelabhängige Farb- und Helligkeitseindrücke zeigen (EP-A-033 457, EP-A-338 428, EP-A-580 022, EP-A-708 154). Dabei sind die mit Eisen (III) oxid beschichteten Aluminiumpigmente, die sich durch brillante Gold- und Orangetöne mit ausgeprägtem Helligkeitsflop auszeichnen, besonders hervorzuheben.

Die Oxidschicht dieser Pigmente vermag die Aluminiumsubstratplättchen jedoch nicht immer ausreichend vor dem Angriff von Wasser oder Wasserdampf zu schützen, so daß beim Kontakt mit Wasser eine Entwicklung von Wasserstoff zu beobachten ist. Deshalb können diese Pigmente nicht ohne zusätzliche Stabilisierung in wäßrigen Beschichtungszusammensetzungen eingesetzt werden. Dies ist insbesondere dann erforderlich, wenn die Pigmente mit feinteiligen oxidischen Pigmenten oder Füllstoffen, z.B. feinteiligen transparenten Eisenoxiden oder feinteiligem Titandioxid, kombiniert werden, was aufgrund der attraktiven koloristischen Effekte wünschenswert ist.

Zur Stabilisierung von unbeschichteten Aluminiumpigmenten gegen Wasser sind eine Reihe von Methoden, wie Phosphatierung, Chromatierung und Vanadatierung, hinlänglich bekannt. Weiterhin werden für diesen Zweck aliphatische und aromatische Nitroverbindungen eingesetzt. So werden in der US-A-2 848 344 nitrogruppenhaltige Kohlenwasserstoffe wie Nitroethan, Nitropropan und Nitrobenzol eingesetzt, um Aluminiumplättchen in Gegenwart einer Fettsäure als Schmiermittel und eines Kohlenwasserstoffs als Lösungsmittel gegen geringe Wassermengen zu stabilisieren. In der US-A-5 215 579 wird Nitroethan mit Phosphorsäureestern kombiniert, um Aluminiumpigmentzubereitungen für wäßrige Beschichtungszusammensetzungen herzustellen.

Weiterhin ist in den EP-A-595 131 und 678 561 die Passivierung von unbeschichteten und eisenoxidbeschichteten Aluminiumpigmenten durch Gasphasenzersetzung von flüchtigen Phosphor-, Silicium- und Vanadiumverbindungen in Gegenwart der Pigmentteilchen beschrieben.

Der Erfindung lag die Aufgabe zugrunde, Metalleffektpigmente auf Basis beschichteter Metallplättchen ohne Beeinträchtigung ihrer koloristischen Eigenschaften wirksam und auf einfache Weise zu stabilisieren, so daß sie universell in wäßrigen Beschichtungszusammensetzungen eingesetzt werden können.

Demgemäß wurden wäßrige Beschichtungszusammensetzungen gefunden, welche ein in Wasser lösliches oder dispergierbares filmbildendes Polymer, ein Metalleffektpigment auf Basis beschichteter Metallplättchen, eine organische Nitroverbindung, die zusätzlich carboxyl-, carbonyl- und/oder hydroxylfunktionalisiert ist, und ein organisches Lösungsmittel, in welchem die Nitroverbindung löslich ist, sowie weitere für wäßrige Beschichtungszusammensetzungen übliche Bestandteile enthalten.

Außerdem wurde ein Verfahren zur Herstellung der wäßrigen Beschichtungszusammensetzungen gefunden, welches dadurch gekennzeichnet ist, daß man die Nitroverbindung in dem organischen Lösungsmittel löst, diese Lösung dann zunächst mit dem Metalleffektpigment und anschließend mit den weiteren Bestandteilen der Beschichtungszusammensetzung mischt.

Weiterhin wurden Pigmentzubereitungen gefunden, welche ein Metalleffektpigment auf Basis beschichteter Metallplättchen, eine organische Nitroverbindung, die zusätzlich carboxyl-, carbonyl- und/oder hydroxylfunktionalisiert ist, und ein organisches Lösungsmittel enthalten, in welchem die Nitroverbindung löslich oder dispergierbar ist.

Nicht zuletzt wurde die Verwendung von organischen Nitroverbindungen, die zusätzlich carboxyl-, carbonyl- und/oder hydroxylfunktionalisiert sind, zur Stabilisierung von Metalleffektpigmenten auf Basis beschichteter Metallplättchen in wäßrigen Beschichtungszusammensetzungen gefunden.

Die erfindungsgemäßen wäßrigen Beschichtungszusammensetzungen enthalten die eingangs beschriebenen Metalleffektpigmente als farbgebende Komponente, wobei mit Metalloxiden, vor allem mit hochbrechenden Metalloxiden wie Chromoxiden (insbesondere Cr₂O₃), Titanoxiden (insbesondere TiO₂) und vor allem Eisenoxiden (insbesondere Fe₂O₃), beschichtete Aluminiumplättchen besondere Bedeutung haben.

Üblicherweise enthalten die erfindungsgemäßen Beschichtungszusammensetzungen 0,1 bis 10 Gew.-% Metalleffektpigment.

Die in den erfindungsgemäßen Beschichtungszusammensetzungen enthaltene organische Nitroverbindung stabilisiert die Metalleffektpigmente auf wirkungsvolle und einfache Weise. Die Nitroverbindung ist zusätzlich carboxyl-, carbonyl- und/oder hydroxylfunktionalisiert und kann aliphatisch oder aromatisch sein, vorzugsweise ist sie jedoch aromatisch. Bevorzugt sind aromatische Carbonsäuren, Alkohole, Aldehyde und Ketone, die einen Benzolring enthalten, der bis zu 3 Nitrogruppen trägt.

Als Beispiele für bevorzugte Nitroverbindungen seien 2-, 3- und 4-Nitrobenzoesäure, 3,5-Dinitrobenzoesäure, 2- und 3-Nitrophthalsäure, 3- und 5-Nitrosalicylsäure, 2-Nitrophenylessigsäure, 2-, 3- und 4-Nitrophenol, 2,3,5-Trinitrophenol (Pikrinsäure), 2-, 3- und 4-Nitrobenzaldehyd und 2-, 3- und 4-Nitroacetophenon genannt.

Mithilfe der erfindungsgemäß eingesetzten Nitroverbindungen kann das Metalleffektpigment wirkungsvoll gegen den Angriff von Wasser stabilisiert werden, ohne daß seine koloristischen Eigenschaften beeinträchtigt werden.

In der Regel kommen, bezogen auf die Beschichtungszusammensetzung, 0,01 bis 10 Gew.-%, bevorzugt 0,02 bis 3 Gew.%, besonders bevorzugt 0,03 bis 1 Gew.-%, Nitroverbindung zum Einsatz.

Die erfindungsgemäßen Beschichtungszusammensetzungen enthalten zusätzlich ein organisches Lösungsmittel, in welchem die Nitroverbindung löslich ist.

Bevorzugt handelt es sich hierbei um ein polares Lösungsmittel, das ein üblicher Bestandteil der Beschichtungszusammensetzung ist. Selbstverständlich kann auch ein zusätzliches Lösungsmittel, das mit den anderen Bestandteilen der Beschichtungszusammensetzung verträglich ist, verwendet werden.

Beispiele für besonders geeignete Lösungsmittel sind Alkylenglykolmonoether, wobei Ethylenglykolmono-C₁-C₈-alkylether und Propylenglykolmono-C₁-C₈-alkylether bevorzugt und die entsprechenden C₁-C₄-Alkylether besonders bevorzugt sind, Alkylenglykoletheracetate und Ketone. Im einzelnen seien beispielsweise Ethylenglykolmonopropyl- und -monobutylether, 1,2-Propylenglykolmonomethyl- und -monoisopropylether, Propylenglykolmonoethyletheracetat, Methylethylketon, Methylpropylketon, Methylisobutylketon und Methylhexylketon genannt, wobei Ethylenglykolmonobutylether und Propylenglykolmonomethylether besonders bevorzugt sind.

Als filmbildendes Polymer können in den erfindungsgemäßen Beschichtungszusammensetzungen alle für wäßrige Systeme (z.B. Lacke, Anstrichfarben, Druckfarben) bekannten Polymere, z.B. Polyurethanharze, Polyesterharze, Acrylharze und/oder Alkydharze, eingesetzt werden, wobei Polyurethanharze bevorzugt sind.

Diese Polymere sowie weitere für wäßrige Beschichtungszusammensetzungen übliche Bestandteile wie Vernetzer, Verdicker, usw. sind allgemein bekannt und z.B. in der WO-A-92/15405 beschrieben.

Von besonderem Vorteil ist, daß den erfindungsgemäßen Beschichtungszusammensetzungen auch die eingangs erwähnten feinteiligen oxidischen Pigmente und Füllstoffe zugesetzt werden können, ohne daß eine Wasserstoffentwicklung zu beobachten ist, so daß die durch Kombination dieser Zusatzstoffe mit den Metalleffektpigmenten erzielbaren koloristischen Effekte genutzt werden können.

Die erfindungsgemäßen Beschichtungszusammensetzungen stellt man vorzugsweise so her, daß man die Nitroverbindung in einem Lösungsmittel, das vorteilhaft ohnehin Bestandteil der späteren Beschichtungszusammensetzung ist oder aber mit deren weiteren Bestandteilen verträglich ist, löst und diese Lösung dann mit dem Metalleffektpigment mischt, was vorzugsweise durch Einrühren des Metalleffektpigments in die Lösung geschieht. Man kann das Metalleffektpigment hierbei als trockenes Pigment oder in Form der handelsüblichen Pasten in einem hochsiedenden Lösungsmittel wie Schwerbenzin, die einen Feststoffgehalt von in der Regel 50 bis 80 Gew.-% aufweisen, einsetzen. Anschließend mischt man die weiteren Bestandteile der Beschichtungszusammensetzung zu.

Liegt das Metalleffektpigment in Form einer lösungsmittelhaltigen Paste vor, kann man die Nitroverbindung abhängig davon, ob die Nitroverbindung in dem Lösungsmittel oder Lösungsmittelgemisch löslich ist oder nicht, auch durch intensives Mischen in dieser Paste verteilen bzw. lösen und diese Paste dann mit den weiteren Bestandteilen der Beschichtungszusammensetzung mischen.

Die erfindungsgemäßen wäßrigen Beschichtungszusammensetzungen zeichnen sich durch ihre Stabilität und ihre vorteilhaften koloristischen Eigenschaften aus und können vorteilhaft für alle Anwendungszwecke, insbesondere auch für die Automobillackierung, eingesetzt werden.

### Beispiele

### A) Herstellung von erfindungsgemäßen wäßrigen Lacken auf Polyurethanbasis

Um die Wirksamkeit der Stabilisierung der Metalleffektpigmente in wäßrigen Systemen zu testen, wurden wäßrige Lacksysteme hergestellt, die zusätzlich ein transparentes Eisenoxidgelbpigment (Sicotrans® L 1916) enthielten.

### Beispiel 1

In eine Lösung von 0,25 g 4-Nitrobenzoesäure in 19,5 g Ethylenglykolmonobutylether wurden 5 g eisen (III) oxidbeschichtetes Aluminiumpigment (Paliocrom® Gold) eingerührt. Anschließend wurden zunächst 34 g einer Wasserabtönpaste auf Basis eines wasserlöslichen Polyurethanharzes, die 14,7 Gew.-% transparentes Eisenoxidgelbpigment enthielt, und dann 255 g eines Mischlacks auf Polyurethanbasis (beschrieben in Beispiel 3 und Beispiel 1.3 der WO-A-92/15405) zugegeben. Nach Zugabe von 7,5 g Wasser wurde mit Aminoethanol ein pH-Wert von 8 eingestellt. Die erhaltene Suspension wurde 15 min mit einem Propellerrührer bei 1000 U/min gerührt.

### Vergleichsbeispiel V

Es wurde analog Beispiel 1 vorgegangen, jedoch wurde keine Nitroverbindung eingesetzt.

### Beispiel 2

Es wurde analog Beispiel 1 vorgegangen, jedoch wurden als Nitroverbindung 0,25 g 3-Nitrobenzoesäure eingesetzt.

### Beispiel 3

Es wurde analog Beispiel 1 vorgegangen, jedoch wurden als Nitroverbindung 0,25 g 3,5-Dinitrobenzoesäure eingesetzt.

### Beispiel 4

Es wurde analog Beispiel 1 vorgegangen, jedoch wurden als Nitroverbindung 0,25 g 2-Nitrophenylessigsäure eingesetzt.

### Beispiel 5

Es wurde analog Beispiel 1 vorgegangen, jedoch wurden als Nitroverbindung 0,25 g 3-Nitroacetophenon eingesetzt.

### Beispiel 6

Es wurde analog Beispiel 1 vorgegangen, jedoch wurden als Nitroverbindung 0,25 g 4-Nitroacetophenon eingesetzt.

### Beispiel 7

Es wurde analog Beispiel 1 vorgegangen, jedoch wurden als Nitroverbindung 0,25 g Pikrinsäure eingesetzt.

### Beispiel 8

Es wurde analog Beispiel 1 vorgegangen, jedoch wurden als Nitroverbindung 0,25 g 3-Nitrophthalsäure eingesetzt.

### Beispiel 9

In eine Lösung von 32,5 g 3-Nitrobenzoesäure in 350 ml 1,2-Propylenglykolmonomethylether wurden 650 g eisen (III) oxidbeschichtetes Aluminiumpigment (Paliocrom Gold) gegeben. Die Mischung wurde 1 h in einem Kneter geknetet. 7,7 g der erhaltenen Paste wurden dann in 19,5 g Ehtylenglykolmonobutylether aufgeschlämmt. Anschließend wurden zunächst 34 g einer Wasserabtönpaste auf Basis eines wasserlöslichen Polyurethanharzes, die 14,7 Gew.-% transparentes Eisenoxidgelbpigment enthielt, und dann 255 g eines Mischlacks auf Polyurethanbasis (beschrieben in Beispiel 3 und Beispiel 1.3 der WO-A-92/15405) zugegeben. Nach Zugabe von 7,5 g Wasser wurde mit Aminoethanol ein pH-Wert von 8 eingestellt. Die erhaltene Suspension wurde 15 min mit einem Propellerrührer bei 1000 U/min gerührt.

### Beispiel 10

Es wurde analog Beispiel 9 vorgegangen, jedoch wurden als Nitroverbindung 32,5 g 3-Nitrophthalsäure eingesetzt.

### B) Prüfung der erfindungsgemäßen Lacke

Zur Prüfung ihrer Stabilität wurden die Lacke aus Beispiel 1 bis 10 in eine Waschflasche mit aufgesetztem Doppelkammer-Gasblasenzähler gefüllt und 30 d auf 40°C temperiert.

In der folgenden Tabelle sind die in dieser Zeit entstandenen Wasserstoffmengen zusammengestellt.

**Tabelle**

| Lack aus Beispiel | Gasentwicklung nach 30 d |
|---|---|
| 1 | 0,5 ml |
| 2 | 0,5 ml |
| 3 | 0,5 ml |
| 4 | 2 ml |
| 5 | 3 ml |
| 6 | 2 ml |
| 7 | 0,5 ml |
| 8 | 2 ml |
| 9 | 0,5 ml |
| 10 | 0,5 ml |
| V | > 20 ml nach 1 d |

## Patentansprüche

1. Wäßrige Beschichtungszusammensetzungen, enthaltend ein in Wasser lösliches oder dispergierbares filmbildendes Polymer, ein Metalleffektpigment auf Basis beschichteter Metallplättchen, eine organische Nitroverbindung, die zusätzlich carboxyl-, carbonyl- und/oder hydroxylfunktionalisiert ist, und ein organisches Lösungsmittel, in welchem die Nitroverbindung löslich ist, sowie weitere für wäßrige Beschichtungszusammensetzungen übliche Bestandteile.

2. Beschichtungszusammensetzungen nach Anspruch 1, die als Metalleffektpigment metalloxidbeschichtete Metallplättchen enthalten.

3. Beschichtungszusammensetzungen nach Anspruch 1 oder 2, die als Metalleffektpigment eisenoxid-, titandioxid- und/oder chromoxidbeschichtete Aluminiumplättchen enthalten.

4. Beschichtungszusammensetzungen nach den Ansprüchen 1 bis 3, die eine aromatische Nitroverbindung enthalten.

5. Beschichtungszusammensetzungen nach den Ansprüchen 1 bis 4, die als Lösungsmittel einen Alkylenglykolmonoether, ein Alkylenglykoletheracetat und/oder ein Keton enthalten.

6. Beschichtungszusammensetzungen nach den Ansprüchen 1 bis 5, die als Polymer ein Polyurethanharz, Polyesterharz, Acrylharz und/oder Alkydharz enthalten.

7. Beschichtungszusammensetzungen nach den Ansprüchen 1 bis 6, die zusätzlich feinteilige oxidische Pigmente enthalten.

8. Verfahren zur Herstellung von Beschichtungszusammensetzungen gemäß den Ansprüchen 1 bis 7, dadurch gekennzeichnet, daß man die Nitroverbindung in dem organischen Lösungsmittel löst, diese Lösung dann zunächst mit dem Metalleffektpigment und anschließend mit den weiteren Bestandteilen der Beschichtungszusammensetzung mischt.

9. Pigmentzubereitungen, enthaltend ein Metalleffektpigment auf Basis beschichteter Metallplättchen, eine organische Nitroverbindung, die zusätzlich carboxyl-, carbonyl- und/oder hydroxylfunktionalisiert ist, und ein organisches Lösungsmittel, in welchem die Nitroverbindung löslich oder dispergierbar ist.

10. Verwendung von organischen Nitroverbindungen, die zusätzlich carboxyl-, carbonyl- und/oder hydroxylfunktionalisiert sind, zur Stabilisierung von Metalleffektpigmenten auf Basis beschichteter Metallplättchen in wäßrigen Beschichtungszusammensetzungen.
